# EUROPÄISCHE PATENTANMELDUNG

(11) **EP 1 168 327 A1**
(43) Veröffentlichungstag der Anmeldung: **02.01.2002**
(21) Anmeldenummer: 01115550.4
(22) Anmeldetag: 28.06.2001
(51) Int. Cl.: G11B 20/00

(54) **Verfahren und Vorrichtung zur kopiergeschützten Aufzeichnung von digitalen Signalen**

(30) Priorität: 01.07.2000 DE 10032090
(71) Anmelder: Grundig AG, 90471 Nürnberg (DE)
(72) Erfinder: Silverberg, Michael, Dr., 90471 Nürnberg (DE); Pröll, Jürgen, Dipl.-Ing., 90471 Nürnberg (DE)

(57) **Zusammenfassung**

Die Erfindung betrifft ein Verfahren zur Aufzeichnung von digitalen Signalen mittels eines Aufzeichnungsgerätes. Bei diesem Verfahren werden die aufzuzeichnenden digitalen Signale im Rahmen einer aufzeichnungsseitigen Signalverarbeitung einem einen Zufallsgenerator aufweisenden Verschlüssler zugeführt, der ausgangsseitig verschlüsselte digitale Signale zur Verfügung stellt. Als Startwert für den Verschlüsselungsvorgang werden dem Zufallsgenerator Daten zugeführt, die der Seriennummer des Aufzeichnungsgerätes entsprechen. Eine Signalwiedergabe kann nur mittels desselben Videorecorders erfolgen, da nur dieser die als Startwert benötigte Seriennummer kennt.

## Beschreibung

Die Erfindung betrifft ein Verfahren und eine Vorrichtung zur kopiergeschützten Aufzeichnung von digitalen Signalen.

Aus dem vom Westermann-Verlag herausgegebenen Lehrbuch "Elektrotechnik Fachbildung Kommunikationelektronik 2 Radio-/Fernseh-/Funktechnik", 1989, Seiten 370-371, ist es im Zusammenhang mit CD-Spielern bereits bekannt, digitale Audiodaten nicht in ihrer natürlichen zeitlichen Reihenfolge, sondern verschachtelt aufzuzeichnen. Zu diesem Zweck werden die Daten aufzeichnungsseitig fortlaufend in RAM-Speicher eingeschrieben und in anderer, aber fest vorgegebener Reihenfolge wieder aus dem RAM ausgelesen. Dadurch werden zeitlich aufeinanderfolgende Abtastwerte räumlich auf dem Aufzeichnungsträger getrennt. Beim Auftreten eines Kratzers einer CD können die dadurch entstehenden Fehler in vielen Fällen durch ein Fehlerkorrekturverfahren kompensiert werden. Ergänzend zu dieser Verschachtelung werden mehrere Abtastwerte nochmals zusammengefaßt und durch sogenannte Paritätsworte ergänzt, deren Werte die Quersumme im jeweiligen Datenblock darstellen. Geht nun ein Datenwert verloren, dann kann dieser durch eine Subtraktion der Restsumme des Datenblocks vom Paritätswort zurückgewonnen werden.

Aus der EP-B1-0 251 626 ist ein Verfahren zur Übertragung eines Audio/Daten-Signals zur Begleitung eines übertragenen Videosignals bekannt. Dabei enthält das zu übertragende Signal einen Bitstrom, welcher in eine Mehrzahl von Rahmen aufgeteilt ist. Jeder Rahmen enthält einen Abschnitt zur Anzeige des Starts eines Rahmens, einen Steuerinformationsabschnitt, einen Zusatzdatenabschnitt und einen Abschnitt mit der Audio/Daten-Information. Letztere ist als Mehrfachbit-Abtastwort codiert. Die Audio/Daten-Information wird einschließlich eines Paritätsbits in einem verschachtelten Format mit vorgegebener Verschachtelungstiefe übertragen. Durch diese Verschachtelung werden die Auswirkungen von Multibit-Fehlern verringert.

Weiterhin ist aus der WO 96/33 579 ein digitales Heimvideosystem bekannt, bei welchem komprimierte Videoprogramme unter Verwendung eines Archivspeichers, beispielsweise eines digitalen Videorecorders, aufgezeichnet und wiedergegeben werden können. Bei diesem bekannten System wird ein Zwischenspeicher verwendet, bei dem es sich um ein Speichermedium mit hoher Geschwindigkeit handelt, beispielsweise eine Speicherplatte. Die ankommenden komprimierten digitalen Videosignale werden in Echtzeit im Zwischenspeicher abgespeichert und dann mit höherer Geschwindigkeit mittels des digitalen Videorecorders aufgezeichnet. Durch eine Aufteilung des Speichermediums mit hoher Geschwindigkeit in mehrere Segmente und die Verwendung eines Verschachtelungsverfahrens können gleichzeitig Daten aufgezeichnet und wiedergegeben werden. Die aufzuzeichnenden Daten können im Aufzeichnungssignalweg verschlüsselt und im Wiedergabesignalweg wieder entschlüsselt werden.

Der Erfindung liegt die Aufgabe zugrunde, ein Verfahren und eine Vorrichtung zur Abspeicherung von Signalen, insbesondere digitalen Signalen, anzugeben, bei denen sichergestellt ist, daß eine Wiedergabe einer getätigten Aufzeichnung und ein eventuelles Anfertigen einer Kopie der getätigten Aufzeichnung nur von befugten Benutzern durchgeführt werden kann.

Diese Aufgabe wird durch ein Verfahren mit den im Anspruch 1 bzw. eine Vorrichtung mit den im Anspruch 9angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß beispielsweise ein Videorecorderbesitzer, der selbst Aufzeichnungen erstellt, sicherstellen kann, daß eine Wiedergabe dieser Aufzeichnungen nur mittels seines eigenen Videorecorders erfolgen kann. Mittels anderer Videorecorder ist eine Wiedergabe dieser Aufzeichnungen nicht möglich.

Weiterhin wird es durch die Erfindung ermöglicht, daß einem Datenserver, bei welchem es sich um einen Sender für digitale Daten wie Fernseh- und Hörrundfunksendungen oder um einen Datenanbieter via Internet handelt, die Möglichkeit gegeben wird, kostenpflichtige Daten, die beispielsweise einem neu erschienenen Fernsehfilm entsprechen, gezielt an einen bestimmten Kunden übertragen zu können, der im voraus dem Datenserver die Seriennummer seines Videorecorders übermittelt und die anfallende Gebühr bezahlt hat. Nur dieser Kunde ist dann dazu in der Lage, den Fernsehfilm aufzeichnen und auch wiedergeben zu können. Ein Kopieren der Aufzeichnung unter Verwendung eines anderen Videorecorders ist nicht möglich.

Weiterhin kann die Erfindung in vorteilhafter Weise auch dazu verwendet werden, gezielt auch weiteren Geräten Zugriff auf die verschlüsselt aufgezeichneten Daten zu geben. Zu diesem Zweck kann durch Eingabe der Seriennummern weiterer Geräte am Aufzeichnungsgerät festgelegt werden, welche weiteren Geräte Zugriff auf die genannten Daten erhalten. Dies erlaubt es beispielsweise, allen Geräten eines Inhouse-Netzes Zugriff auf die genannten Daten zu geben. Bei dieser Ausführungsform der Erfindung wird der Startwert für den Zufallsgenerator durch Verwendung der Seriennummern aller berechtigten Geräte im Sinne einer hierarchischen Codierung verwendet. Dieser im Sinne einer hierarchischen Codierung berechnete Startwert wird in allen berechtigten Geräten abgespeichert. Folglich kann eine mittels eines der berechtigten Geräte getätigte Aufzeichnung auch mittels jeden anderen berechtigten Gerätes wiedergegeben werden.

Weitere vorteilhafte Eigenschaften der Erfindung ergeben sich aus der Erläuterung von Ausführungsbeispielen anhand der Figuren. Es zeigt
Figur 1 ein Blockschaltbild zur Erläuterung der aufzeichnungsseitigen Signalverarbeitung bei einem ersten Ausführungsbeispiel für die Erfindung,
Figur 2 ein Blockschaltbild zur Erläuterung der wiedergabeseitigen Signalverarbeitung beim ersten Ausführungsbeispiel für die Erfindung,
Figur 3 ein Blockschaltbild zur Erläuterung der aufzeichnungsseitigen Signalverarbeitung bei einem zweiten Ausführungsbeispiel für die Erfindung,
Figur 4 ein Blockschaltbild zur Erläuterung der wiedergabeseitigen Signalverarbeitung beim zweiten Ausführungsbeispiel für die Erfindung,
Figur 5 ein Blockschaltbild zur Erläuterung der aufzeichnungsseitigen Signalverarbeitung bei einem dritten Ausführungsbeispiel für die Erfindung,
Figur 6 ein Blockschaltbild zur Erläuterung der wiedergabeseitigen Signalverarbeitung beim dritten Ausführungsbeispiel für die Erfindung.

Die Erfindung betrifft ein Verfahren und eine Vorrichtung zur kopiergeschützten Aufzeichnung von digitalen Signalen. Digitale Signale, bei denen es sich um von einem Fernseh- oder Hörrundfunksender abgestrahlte Fernseh- oder Hörrundfunksignale oder auch um via Internet übertragene digitale Daten handeln kann, sollen von einem Berechtigten mittels eines Aufzeichnungsgerätes aufgezeichnet und auch mittels dieses Aufzeichnungsgerätes wiedergegeben werden können. Mittels weiterer Aufzeichnungsgeräte sollen die aufgezeichneten digitalen Signale nicht wiedergebbar sein.

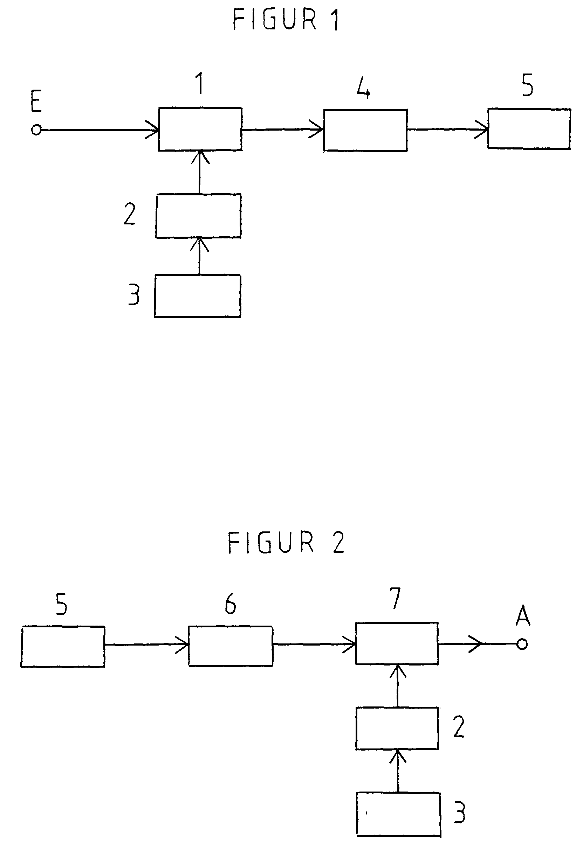

Dies wird bei dem in der Figur 1 gezeigten Ausführungsbeispiel wie folgt erreicht: Die aufzuzeichnenden digitalen Signale, bei denen es sich beispielsweise um mittels einer Settop-Box empfangene und an den Aufzeichnungssignalweg eines digitalen Videorecorders weitergeleitete Fernsehsignale handelt, stehen am Eingang E zur Verfügung. Von dort aus werden sie an eine Verschlüsselungseinheit 1 geführt, die einen Zufallsgenerator aufweist. In diesem erfolgt eine Verschlüsselung der digitalen Signale dadurch, daß sie fortlaufend in einen Speicher der Verschlüsselungseinheit eingeschrieben und mit veränderter, vom Zufallsgenerator vorgegebener Reihenfolge wieder aus dem Speicher ausgelesen werden. Als Startadresse für das Auslesen der Daten aus dem Speicher werden Daten verwendet, die der Seriennummer des die Signale aufzeichnenden digitalen Videorecorders entsprechen. Die der Seriennummer des Videorecorders entsprechenden Daten wurden bereits werksseitig in einen Speicher 3 des Videorecorders nichtflüchtig eingespeichert. Am Beginn des Aufzeichnungsvorganges werden diese Daten vom Mikrocomputer 2 aus dem Speicher 3 ausgelesen und dem Verschlüssler 1 bzw. dessen Zufallsgenerator als Startadresse zugeführt. Die Ausgangssignale des Verschlüsslers 1 werden an eine Aufzeichnungskopfeinheit 4 des Videorecorders weitergegeben und von deren Köpfen auf einen Aufzeichnungsträger 5 aufgezeichnet.

Folglich werden bei dem in der Figur 1 gezeigten Ausführungsbeispiel unter Verwendung eines Zufallgenerators verschlüsselte Signale aufgezeichnet, wobei als Startwert für den Verschlüsselungsvorgang Daten verwendet werden, die der vom Hersteller des Videorecorders vorgegebenen und bereits bei der Herstellung des Videorecorders im Werk in einem nichtflüchtigen Speicher des Videorecorders abgespeicherten Seriennummer des Videorecorders entsprechen.

Die Figur 2 zeigt ein Blockschaltbild zur Erläuterung der wiedergabeseitigen Signalverarbeitung beim ersten Ausführungsbeispiel für die Erfindung. Die auf dem Aufzeichnungsträger 5 aufgezeichneten Signale werden mittels der Videoköpfe der Wiedergabekopfeinheit 6 gelesen und der Entschlüsselungseinheit 7 zugeführt, die einen Zufallsgenerator aufweist. Bei der in der Figur 1 gezeigten Verschlüsselungseinheit 1 und der in der Figur 2 gezeigten Entschlüsselungseinheit 7 kann es sich um ein und dieselbe Schaltung handeln, mittels derer sowohl eine Verschlüsselung als auch eine Entschlüsselung der Signale durchführbar ist. Im Zufallsgenerator erfolgt wiedergabeseitig eine Entschlüsselung der wiedergegebenen Signale dadurch, daß dem Zufallsgenerator zu Beginn des Wiedergabevorganges vom Mikrocomputer 2 die im Speicher 3 abgespeicherten Daten, die der Seriennummer des Videorecorders entsprechen, als Startadresse zugeführt werden und die wiedergegebenen Daten in entsprechende Speicherplätze eines Speichers des Entschlüsslers 7 eingeschrieben werden, die vom Zufallsgenerator vorgegeben werden.

Danach erfolgt ein fortlaufendes Auslesen der Daten aus dem Speicher des Entschlüsslers 7, so daß die Daten in ihrer ursprünglichen Reihenfolge am Ausgang A der in Figur 2 gezeigten Vorrichtung zur Verfügung gestellt werden.

Da sowohl bei der Aufzeichnung als auch bei der Wiedergabe jeweils als Startwert für den Zufallsgenerator des Ver- bzw. Entschlüsslers Daten verwendet werden, die der Seriennummer des Videorecorders entsprechen, ist sichergestellt, daß die verschlüsselt aufgezeichneten Daten auch korrekt entschlüsselt werden können.

Wird hingegen versucht, den bespielten Aufzeichnungsträger mittels eines anderen Videorecorders wiederzugeben, der eine andere Seriennummer besitzt, oder mittels eines Videorecorders eines anderen Herstellers, dann kann keine korrekte Entschlüsselung erfolgen, da diesem anderen Videorecorder die Seriennummer desjenigen Videorecorders, mittels dessen die Aufzeichnung erfolgt ist, nicht bekannt ist. Folglich ist auf dem Bildschirm, auf welchem das wiedergegebene Signal in diesem Fall dargestellt wird, lediglich Rauschen zu sehen.

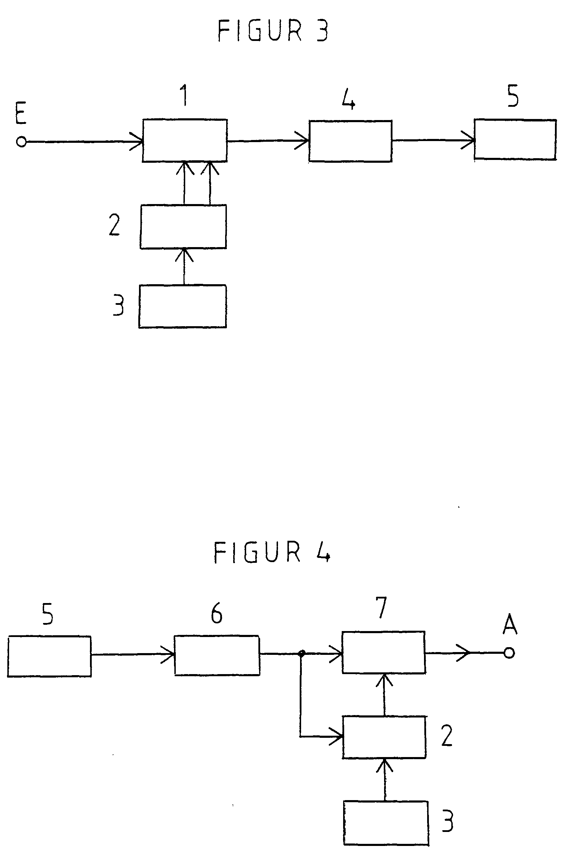

Die Figur 3 zeigt ein Blockschaltbild zur Erläuterung der aufzeichnungsseitigen Signalverarbeitung bei einem zweiten Ausführungsbeispiel für die Erfindung. Dieses Ausführungsbeispiel unterscheidet sich von dem in der Figur 1 gezeigten Ausführungsbeispiel dadurch, daß im Aufzeichnungssignalweg die der Seitennummer des Videorecorders entsprechenden Daten im Verschlüssler 1 in das aufzuzeichnende Signal eingesetzt werden und somit zusammen mit diesem auf dem Aufzeichnungsträger 5 aufgezeichnet werden.

Ein Blockschaltbild der zugehörigen wiedergabeseitigen Signalverarbeitung ist in der Figur 4 gezeigt. Aus dieser ist ersichtlich, daß das Ausgangssignal der Wiedergabekopfeinheit 6 auch dem Mikrocomputer 2 zugeführt wird, in welchem ein Vergleich der im Ausgangssignal der Wiedergabekopfeinheit 6 enthaltenen Daten mit den im Speicher 3 abgespeicherten, der Seriennummer des Videorecorders entsprechenden Daten erfolgt.

Liefert dieser Vergleich ein positives Ergebnis, dann wird der Wiedergabevorgang freigegeben und dem Zufallsgenerator des Entschlüsslers 7 die der Seriennummer des Videorecorders entsprechenden Daten als Startsignal bzw. Startadresse für den Entschlüsselungsvorgang zugeführt.

Liefert dieser Vergleich hingegen ein negatives Ergebnis, dann sperrt der Mikrocomputer 2 den Wiedergabevorgang. Dies kann dadurch geschehen, daß er dem Zufallsgenerator die als Startwert benötigten, der Seriennummer des Videorecorders entsprechenden Daten nicht zuführt. Dies hat zur Folge, daß am Bildschirm, auf welchem die wiedergegebenen Signale dargestellt werden, lediglich Rauschen zu sehen ist. Alternativ dazu kann der Mikrocomputer auch den Signalweg an beliebiger Stelle unterbrechen und gegebenenfalls auch die Anzeige einer Fehlermeldung in die Wege leiten, durch welche dem Benutzer mitgeteilt wird, daß eine korrekte Entschlüsselung des wiedergegebenen Signals nicht möglich ist.

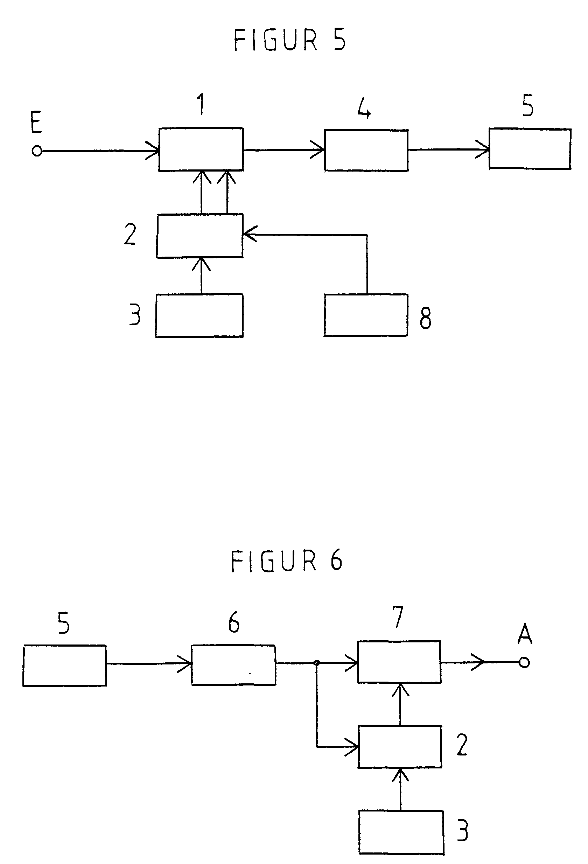

Die Figur 5 zeigt ein Blockschaltbild zur Erläuterung der aufzeichnungsseitigen Signalverarbeitung bei einem dritten Ausführungsbeispiel für die Erfindung. Dieses Ausführungsbeispiel unterscheidet sich von den vorherigen Ausführungsbeispielen dadurch, daß im aufzeichnenden Videorecorder dafür Sorge getragen wird, daß ein Abspielen und korrektes Entschlüsseln der aufgezeichneten Daten auch mittels bestimmter weiterer Videorecorder möglich ist. Zu diesem Zweck erfolgt mittels der Bedieneinheit 8 eine Eingabe der Seriennummern derjenigen weiteren Videorecorder, mittels derer ebenfalls eine korrekte Entschlüsselung der aufgezeichneten Signale durchführbar sein soll. Beispielsweise kann es sich bei den berechtigten Videorecordern um alle Videorecorder eines Haushalts, einer Firma oder eines Inhouse-Netzes handeln.

Bei diesem Ausführungsbeispiel werden die den Seriennummern sämtlicher zugriffsberechtigter Videorecorder entsprechenden Daten im Verschlüssler 1 in das aufzuzeichnende Signal eingesetzt und somit zusammen mit diesem auf dem Aufzeichnungsträger 5 aufgezeichnet.

Ein Blockschaltbild der zugehörigen wiedergabeseitigen Signalverarbeitung ist in der Figur 6 gezeigt. Aus dieser ist ersichtlich, daß das Ausgangssignal der Wiedergabekopfeinheit 6 auch dem Mikrocomputer 2 zugeführt wird. Dort erfolgt ein Vergleich der im Ausgangssignal der Wiedergabekopfeinheit enthaltenen Daten mit den im Speicher 3 abgespeicherten, der Seriennummer des wiedergebenden Videorecorders entsprechenden Daten.

Stimmt eine der im Wiedergabesignal enthaltenen Seriennummern mit der Seriennummer des wiedergebenden Videorecorders überein, dann liefert dieser Vergleich ein positives Ergebnis. In diesem Fall erkennt der Mikrocomputer 2, daß der wiedergebende Videorecorder zur Wiedergabe berechtigt ist, gibt den Wiedergabevorgang frei und führt dem Zufallsgenerator des Entschlüsslers 7 die der Seriennummer des Videorecorders, mittels dessen die Aufzeichnung erfolgt ist, entsprechenden Daten als Startwert für den Entschlüsselungsvorgang zu. Der Mikrocomputer erkennt die Seriennummer des Videorecorders, mittels dessen die Aufzeichnung erfolgt ist, beispielsweise daran, daß die dieser Seriennummer entsprechenden Daten im aufgezeichneten Signal mit einer gesonderten Markierung versehen sind. Alternativ dazu ist es auch möglich, daß innerhalb der Gruppe der berechtigten Videorecorder nur einer zur Aufzeichnung berechtigt ist und dessen Seriennummer allen anderen Videorecordern der Gruppe mitgeteilt wird, beispielsweise über eine entsprechende Dateneingabe mittels der jeweiligen Fernbedienung oder über einen elektronischen Datenaustausch, falls die Videorecorder an ein gemeinsames Datennetz angeschlossen sind.

Eine alternative Möglichkeit zu dem in der Figur 5 gezeigten Ausführungsbeispiel besteht darin, die Seriennummer aller berechtigten Videorecorder im Sinne einer hierarchischen Codierung zu verwenden und unter Verwendung aller dieser Seriennummern einen Startwert für den Zufallsgenerator des Verschlüsslers zu berechnen. Dieser aus den Seriennummern aller berechtigter Videorecorder berechnete Startwert wird dann ebenfalls in das aufgezeichnete Signal eingesetzt und mit diesem zusammen auf dem Aufzeichnungsträger 5 aufgezeichnet. Wiedergabeseitig erfolgt im Mikrocomputer 2 ein Vergleich des aufgezeichneten Startwertes mit dem im Speicher 3 abgespeicherten Startwert und - je nach Vergleichsergebnis - ein Sperren oder Freigeben des Wiedergabevorganges. Der im "Hauptvideorecorder" ermittelte Startwert kann entweder auf elektronischem Wege in die berechtigten Videorecorder übermittelt werden oder durch eine Eingabe der Seriennummer aller berechtigter Videorecorder mittels der jeweiligen Bedieneinheit eingegeben werden, wobei im letzteren Falle in jedem der berechtigten Videorecorder aus den eingegebenen Seriennummern der Startwert berechnet wird.

## Patentansprüche

1. Verfahren zur Aufzeichnung von digitalen Signalen mittels eines Aufzeichnungsgerätes, in welchem die aufzuzeichnenden Signale im Rahmen einer aufzeichnungsseitigen Signalverarbeitung einem einen Zufallsgenerator aufweisenden Verschlüssler zugeführt werden, der ausgangsseitig verschlüsselte Signale zur Verfügung stellt,
**dadurch gekennzeichnet, daß**
der Zufallsgenerator als Startwert für den Verschlüsselungsvorgang im Aufzeichnungsgerät abgespeicherte Daten verwendet, die der Seriennummer des Aufzeichnungsgerätes entsprechen oder die von der Seriennummer des Aufzeichnungsgerätes abgeleitet sind.

2. Verfahren nach Anspruch 1,
**dadurch gekennzeichnet, daß**
die aufzuzeichnenden Signale digitale Signale und die ausgangsseitig verschlüsselten Signale digitale Signale sind oder die aufzuzeichnenden Signale analoge Signale und die ausgangsseitig verschlüsselten Signale digitale Signale sind, oder die aufzuzeichnenden Signale analoge Signale und die ausgangsseitig verschlüsselten Signale analoge Signale sind

3. Verfahren nach Anspruch 1 oder 2,
**dadurch gekennzeichnet, daß**
die wiedergegebenen Daten im Rahmen einer wiedergabeseitigen Signalverarbeitung einem einen Zufallsgenerator enthaltenden Entschlüssler zur Entschlüsselung der wiedergegebenen Daten zugeführt werden und der Zufallsgenerator als Startwert für den Entschlüsselungsvorgang Daten verwendet, die der Seriennummer des Aufzeichnungsgerätes entsprechen oder die von der Seriennummer des Aufzeichnungsgerätes abgeleitet sind.

4. Verfahren nach einem oder mehreren der Ansprüche 1 bis 3,
**dadurch gekennzeichnet, daß**
die der Seriennummer des Aufzeichnungsgerätes entsprechenden oder von ihr abgeleiteten Daten in den aufzuzeichnenden Datenstrom eingefügt und auf dem Aufzeichnungsträger aufgezeichnet werden.

5. Verfahren nach Anspruch 4,
**dadurch gekennzeichnet, daß**
im Rahmen einer wiedergabeseitigen Signalverarbeitung die im wiedergegebenen Datenstrom enthaltenen, der Seriennummer des Aufzeichnungsgerätes entsprechenden oder von ihr abgeleiteten Daten mit im Aufzeichnungsgerät abgespeicherten Daten, die der Seriennummer des Aufzeichnungsgerätes entsprechen oder von ihr abgeleitet sind, verglichen werden und bei erkannter Übereinstimmung der Wiedergabevorgang freigegeben wird.

6. Verfahren nach Anspruch 4,
**dadurch gekennzeichnet, daß**
im Rahmen einer wiedergabeseitigen Signalverarbeitung die im wiedergegebenen Datenstrom enthaltenen, der Seriennummer des Aufzeichnungsgerätes entsprechenden oder von ihr abgeleiteten Daten mit im Aufzeichnungsgerät abgespeicherten Daten, die der Seriennummer des Aufzeichnungsgerätes entsprechen oder von ihr abgeleitet wird, verglichen werden und bei erkannter Nichtübereinstimmung der Wiedergabevorgang gesperrt wird.

7. Verfahren nach einem der Ansprüche 3-6,
**dadurch gekennzeichnet, daß**
mittels einer Eingabeeinheit des Aufzeichnungsgerätes Daten, die einer oder mehreren weiteren Seriennummern von weiteren Aufzeichnungsgeräten entsprechen, eingegeben, im Aufzeichnungsgerät abgespeichert und beim Aufzeichnungsvorgang in den aufzuzeichnenden Datenstrom eingefügt und auf dem Aufzeichnungsträger aufgezeichnet werden.

8. Verfahren nach Anspruch 7,
**dadurch gekennzeichnet, daß**
im Rahmen einer wiedergabeseitigen Signalverarbeitung die im wiedergegebenen Datenstrom enthaltenen, den Seriennummern weiterer Aufzeichnungsgeräte entsprechenden Daten mit in einem Aufzeichnungsgerät abgespeicherten Daten, die der Seriennummer des Aufzeichnungsgerätes entsprechen, verglichen werden und bei erkannter Übereinstimmung der Wiedergabevorgang freigegeben wird.

9. Vorrichtung zur Aufzeichnung von Signalen, mit
einem im Aufzeichnungssignalweg angeordneten, einen Zufallsgenerator aufweisenden Verschlüssler (1), der ausgangsseitig verschlüsselte Signale zur Verfügung stellt,
einem nichtflüchtigen Speicher (3) zur Abspeicherung von Daten, die der Seriennummer des Aufzeichnungsgerätes entsprechen und
einer Steuereinheit (2), die zu Beginn eines Verschlüsselungsvorganges zur Zuführung der im nichtflüchtigen Speicher (3) abgespeicherten, der Seriennummer des Aufzeichnungsgerätes entsprechenden oder von ihr abgeleiteten Daten an den Zufallsgenerator vorgesehen ist.

10. Vorrichtung nach Anspruch 9,
**dadurch gekennzeichnet, daß**
die aufzuzeichnenden Signale digitale Signale und die ausgangsseitig verschlüsselten Signale digitale Signale sind oder die aufzuzeichnenden Signale analoge Signale und die ausgangsseitig verschlüsselten Signale digitale Signale sind, oder die aufzuzeichnenden Signale analoge Signale und die ausgangsseitig verschlüsselten Signale analoge Signale sind

11. Vorrichtung nach Anspruch 9 oder 10,
**dadurch gekennzeichnet, daß**
sie eine Einfügschaltung (1) aufweist, in welcher die der Seriennummer des Aufzeichnungsgerätes entsprechenden oder von ihr abgeleiteten Daten in den aufzuzeichnenden Datenstrom eingefügt werden.

12. Vorrichtung nach einem oder mehreren der Ansprüche 9 bis 11,
**dadurch gekennzeichnet, daß**
sie einen im Wiedergabesignalweg angeordneten Vergleicher (2) aufweist, dem eingangsseitig die im wiedergegebenen Datenstrom enthaltenen, der Seriennummer des Aufzeichnungsgerätes entsprechenden oder von ihr abgeleiteten Daten und die im nichtflüchtigen Speicher (3) des Aufzeichnungsgerätes abgespeicherten, der Seriennummer des Aufzeichnungsgerätes entsprechenden oder von ihr abgeleiteten Daten zugeführt werden, und an dessen Ausgang bei erkannter Übereinstimmung ein den Wiedergabevorgang freigebendes Ausgangssignal bereitgestellt wird.

13. Vorrichtung nach einem oder mehreren der Ansprüche 9 bis **12,**
**dadurch gekennzeichnet, daß**
sie einen im Wiedergabesignalweg angeordneten Vergleicher (2) aufweist, dem eingangsseitig die im wiedergegebenen Datenstrom enthaltenen, der Seriennummer des Aufzeichnungsgerätes entsprechenden oder von ihr abgeleiteten Daten und die im nichtflüchtigen Speicher (3) des Aufzeichnungsgerätes abgespeicherten, der Seriennummer des Aufzeichnungsgerätes entsprechenden oder von ihr abgeleiteten Daten zugeführt werden, und an dessen Ausgang bei erkannter Nichtübereinstimmung ein den Wiedergabevorgang sperrendes Ausgangssignal bereitgestellt wird.

14. Vorrichtung nach einem oder mehreren der Ansprüche 9 bis 13,
**dadurch gekennzeichnet, daß**
der nichtflüchtige Speicher (3) zur Abspeicherung von Daten vorgesehen ist, die den Seriennummern mehrerer verschiedener Aufzeichnungsgeräte entsprechen und daß das Aufzeichnungsgerät Eingabemittel (8) aufweist, mittels derer die Seriennummern weiterer Aufzeichnungsgeräte eingebbar sind.

15. Vorrichtung nach Anspruch 14,
**dadurch gekennzeichnet, daß**
dem Vergleicher (2) eingangsseitig die im wiedergegebenen Datenstrom enthaltenen, den Seriennummern weiterer Aufzeichnungsgeräte entsprechenden Daten und die im nichtflüchtigen Speicher des Aufzeichnungsgerätes abgespeicherten Daten zugeführt werden, und der Vergleicher beim Erkennen einer Übereinstimmung einer der im wiedergegebenen Datenstrom enthaltenen Seriennummern mit der im nichtflüchtigen Speicher (3) abgespeicherten Seriennummer ein den Wiedergabevorgang freigebendes Ausgangssignal bereitstellt.

16. Vorrichtung nach Anspruch 13 oder 14,
**dadurch gekennzeichnet, daß**
dem Vergleicher (2) eingangsseitig die im wiedergegebenen Datenstrom enthaltenen, den Seriennummern weiterer Aufzeichnungsgeräte entsprechenden Daten und die im nichtflüchtigen Speicher des Aufzeichnungsgerätes abgespeicherten Daten zugeführt werden, und der Vergleicher beim Erkennen einer Nichtübereinstimmung einer der im wiedergegebenen Datenstrom enthaltenen Seriennummern mit der im nichtflüchtigen Speicher (3) abgespeicherten Seriennummer ein den Wiedergabevorgang sperrendes Ausgangssignal bereitstellt.

17. Vorrichtung nach Anspruch 13,
**dadurch gekennzeichnet, daß**
die im nichtflüchtigen Speicher (3) des Aufzeichnungsgerätes abgespeicherten Daten Daten sind, die im Sinne einer hierarchischen Codierung aus den Seriennummern mehrerer berechtigter Videorecorder abgeleitet sind.
